# EUROPÄISCHE PATENTSCHRIFT

(11) **EP 1 531 238 B1**
(45) Veröffentlichungstag und Bekanntmachung des Hinweises auf die Patenterteilung: **02.07.2008**
(21) Anmeldenummer: 04015846.1
(22) Anmeldetag: 06.07.2004
(51) Int. Cl.: F01D 25/14, F01D 25/26, F02C 6/12

(54) **Gehäuseanordnung für den Turbolader einer Brennkraftmaschine**
Casing arrangement for the turbocharger of an internal combustion engine
Arrangement d'un boîtier pour le turbocompresseur d'un moteur à combustion interne

(30) Priorität: 13.11.2003 DE 10352960
(43) Veröffentlichungstag der Anmeldung: 18.05.2005
(73) Patentinhaber: Benteler Automobiltechnik GmbH, 33104 Paderborn (DE); BorgWarner Inc., Auburn Hills, Michigan 48326-1782 (US)
(72) Erfinder: Körner, Thomas, 45661 Recklinhausen (DE); Müller, Rainer, 67269 Grünstadt (DE); Grussmann, Elmar, 33184 Altenbeken (DE); Smatloch, Christian Dr., 33100 Paderborn (DE); Hinder, Axel, 33178 Borchen (DE)
(74) Vertreter: Ksoll, Peter

(56) Entgegenhaltungen:
- EP-A- 0 918 140
- EP-A- 1 245 885
- WO-A-02/29211
- DE-A1- 19 606 003
- US-A1- 2 860 827
- US-A1- 3 820 829

## Beschreibung

Die Erfindung betrifft eine Gehäuseanordnung für den Turbolader einer Brennkraftmaschine gemäß den Merkmalen im Oberbegriff des Anspruchs 1.

Wesentliche, jedoch nicht ausschließliche Bestandteile einer derartigen Gehäuseanordnung sind ein Laufradgehäuse mit Zufuhrkanal, ein mit dem Laufradgehäuse gekoppelter sowie an einen Auslassflansch angeschlossener Überströmbereich für Abgas und ein mindestens den Überströmbereich, das Laufradgehäuse und den Zufuhrkanal umschließendes Mantelgehäuse.

In diesem Zusammenhang ist es im Umfang der DE 100 22 052 C2 bekannt, das Laufradgehäuse zweiteilig auszubilden und mit einem Ende eines Auslassrohrs zu verschweißen, das über sein anderes Ende zusammen mit einer Hälfte eines Mantelgehäuses in einem Verbindungsflansch verschweißt ist.

Durch das Verschweißen des Auslassrohrs einerseits mit dem Laufradgehäuse und andererseits mit dem Verbindungsflansch wird zwar ein Vorbeiströmen von Abgas durch den Luftspalt am Turbinenrad wirksam vermieden, aber auch eine erhebliche thermische Spannung in das aus dem Laufradgehäuse und dem Auslassrohr bestehende Innensystem eingebracht. Diese thermische Spannung verstärkt sich umso mehr, als das Mantelgehäuse aufgrund des isolierenden Luftspalts zum Laufradgehäuse und Überströmbereich hin wesentlich kälter ist als bei einem direkten Kontakt mit dem Abgas. Diese Spannungsbeaufschlagung bei hohen Betriebstemperaturen bewirkt eine frühe Ermüdung des Werkstoffs und damit ein vorzeitiges Versagen des Laufradgehäuses und/oder des Auslassrohrs.

Beim Stand der Technik kann es außerdem durch thermisch induzierte Verformungen zu einem Kontakt von Laufradgehäuse und Laufrad kommen. Hiermit ist ein sofortiger Ausfall des Turboladers verbunden.

In der WO 02/29211 A1 wird eine Gasturbineneinheit mit einem Laufradgehäuse beschrieben, das aus zwei Hälften zusammengesetzt ist, die am Außenumfang miteinander verbunden sind. Das Laufradgehäuse ist mit einer Flanschanordnung, vorzugsweise durch Klemmen, verbunden, wobei die Flanschanordnung in ein Überströmrohr relativverschieblich eingreift. Die relativverschiebliche Lagerung erfolgt unter Eingliederung eines Dichtrings, der in eine innen umlaufende Nut des Überströmrohrs angeordnet ist. Insgesamt ist die Ausbildung dieser relativverschieblichen Lagerung, sowohl fertigungstechnisch als auch montagetechnisch aufwendig.

Aus der DE 196 06 003 A1 ist eine Schiebesitz-Rohrverbindung bekannt geworden, bei der ein Endbereich eines ersten Rohres an seiner Innenseite mit einem radial nach innen vorstehenden Vorsprung versehen ist, so dass die beiden Rohrendbereiche axial gegeneinander verkippbar sind. Damit ist eine gewisse Schrägstellung der miteinander verbundenen Rohre ohne Beeinträchtigung des Schiebesitzes möglich.

Die EP 1 245 885 A1 beschreibt einen mehrlagigen Schlauch aus profiliertem Bandmaterial, hergestellt durch schraubenförmiges, mehrlagiges Wickeln. Die Wickellagen haken ineinander ein, wobei an einer Wickellage ein im Wesentlichen parallel zur Schlauchlängsachse umgebogener horizontaler Profilabschnitt ausgebildet ist, und wobei beide Wickellagen mit einem Profilendabschnitt versehen sind, die einander überlappen. In den Profilendabschnitten können schlaufenartige Erhöhungen und darin angeordnete Dichtungen ausgebildet sein, um eine zusätzliche Umfangsdichtung zu schaffen. Derartige Schläuche eignen sich für Abgasleitungen von Brennkraftmaschinen.

Eine andere Art der Ausgleichskupplung ist ein so genannter Faltenbalg, wie er beispielsweise der US 3 820 829 zu entnehmen ist, oder wie er in der EP 0 918 140 A1 beschrieben wird.

Hiervon ausgehend liegt der Erfindung die Aufgabe zu Grunde eine Gehäuseanordnung für den Turbolader einer Brennkraftmaschine zu schaffen, bei welcher eine relativverschiebliche Verbindung des Laufradgehäuses mit dem Überströmbereich erfolgt, wobei die Verbindung Herstellungstechnisch günstiger ausgebildet ist.

Diese Aufgabe wird mit den im kennzeichnenden Teil des Anspruchs 1 angegebenen Merkmalen gelöst.

Die Erfindung nutzt die an sich bekannte Trennung der Funktionen des Mantelgehäuses einerseits und des Laufradgehäuses andererseits. Während das für jeden Anwendungsfall konstruktiv entsprechend anzupassende, bevorzugt mehrteilige, Mantelgehäuse, das aus Stahlblech oder zumindest teilweise auch aus Feinguss bestehen kann, die Funktionen Dichten und Tragen übernimmt, hat das zweckmäßig ebenfalls mehrteilig ausgebildete Laufradgehäuse die Funktion der Abgasführung wahrzunehmen, so dass es sehr schnell warm wird und somit zusätzlich die Funktion "schnelles Aufheizen des Katalysators" unterstützt. Zu diesem Zweck soll die Wanddicke des Laufradgehäuses so dünn wie nur möglich ausgeführt werden.

Wird ein kalter Motor gestartet, so erhitzt sich das Laufradgehäuse sehr schnell und dehnt sich entsprechend aus. Das Mantelgehäuse ist demgegenüber aber noch kalt und unterliegt so gut wie keiner Wärmeausdehnung. Aufgrund der relativ verschieblichen Kopplung des Überströmbereichs mit dem Laufradgehäuse können jetzt die wärmebedingten Bewegungen des Laufradgehäuses ausgeglichen werden und es treten auch bei hohen Temperaturen keine schädlichen Spannungen auf. Ein Kontakt von Laufradgehäuse und Laufrad mit den damit einhergehenden negativen Folgen ist ausgeschlossen.

Auch bei einer anderen Betriebssituation macht sich die Erfindung mit Vorteil bemerkbar. Wird beispielsweise eine Passstraße bergauf befahren, so wird das Laufradgehäuse sehr warm. Rollt dann das Fahrzeug bergab, insbesondere mit Motorbremse, dann erkaltet das Laufradgehäuse verhältnismäßig schnell, da kalte Luft (ohne Verbrennung, sogenannte Schubabschaltung ist in Kraft) durch den Motor in das Laufradgehäuse geführt wird. Dadurch zieht sich das Laufradgehäuse vergleichsweise schnell zusammen, während das Mantelgehäuse noch warm bleibt. Auch bei dieser Fahrsituation verhindert folglich die relativ verschiebliche Kopplung des Laufradgehäuses mit dem Überströmbereich unzulässige Spannungen. Die Lebenserwartung einer erfindungsgemäß aufgebauten Gehäuseanordnung wird mithin deutlich erhöht.

Ein wesentlicher Vorteil der Erfindung ist die höhere Dauerhaltbarkeit durch Abbau von thermischen Spannungen sowohl bei Aufheiz- als auch bei Abkühlvorgängen. Darüber hinaus wird ein höherer Gesamtwirkungsgrad durch optimiertes Betriebsverhalten über der Betriebstemperatur erzielt. Auch können die Herstellungskosten durch Materialdiversifikation oder durch den Einsatz von weniger kostenintensiven Werkstoffen gesenkt werden. Die Erfindung kann gleichermaßen mit Vorteil bei zweiflutigen Gehäusen als auch bei Turboladern mit sogenannter verstellbarer Turbinengeometrie eingesetzt werden.

Die Ausgestaltung des Überströmbereichs ist an sich beliebig. Er kann ein besonderes Bauteil sein oder auch in den Auslassflansch einteilig integriert sein, z.B. dann, wenn insbesondere Feinguss zur Fertigung des Auslassflansches zum Einsatz gelangt.

Das Laufradgehäuse weist einen axial ausgerichteten rohrförmigen Abgangsstutzen auf, der von einem zylindrisch ausgebildeten Ende des Überströmbereichs relativ verschieblich übergriffen ist. Es handelt sich hierbei folglich um einen Schiebesitz, der trotz enger Gestaltung nicht gasdicht sein muss, da das Mantelgehäuse die Abdichtung gegenüber der Umgebung wahrnimmt.

Eine verbesserte Dichtfunktion bei sehr guter Schiebefunktion und erhöhter Lebensdauer des Gesamtsystems wird dadurcherzielt, dass das den Abgangsstutzen übergreifende Ende des Überströmbereichs mit einem radial nach außen geprägten Ringwulst versehen ist. In die dadurch gebildete innere Ringnut ist ein Dichtelement eingebettet. Dieses Dichtelement ist insbesondere als Dichtring ausgebildet, der an der äußeren Oberfläche des Abgangsstutzens zur Anlage kommt.

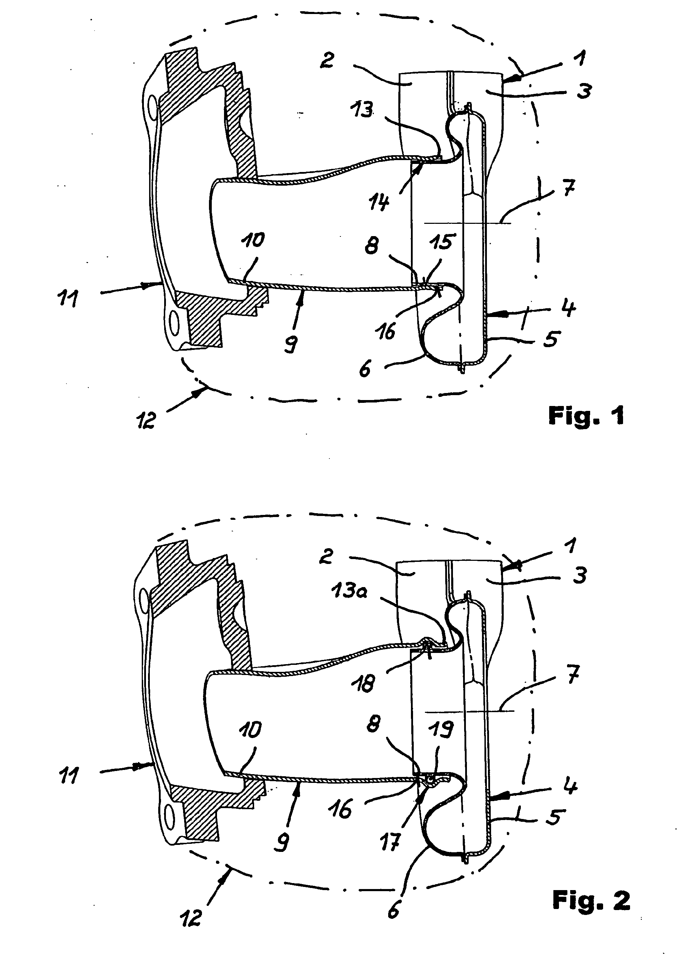

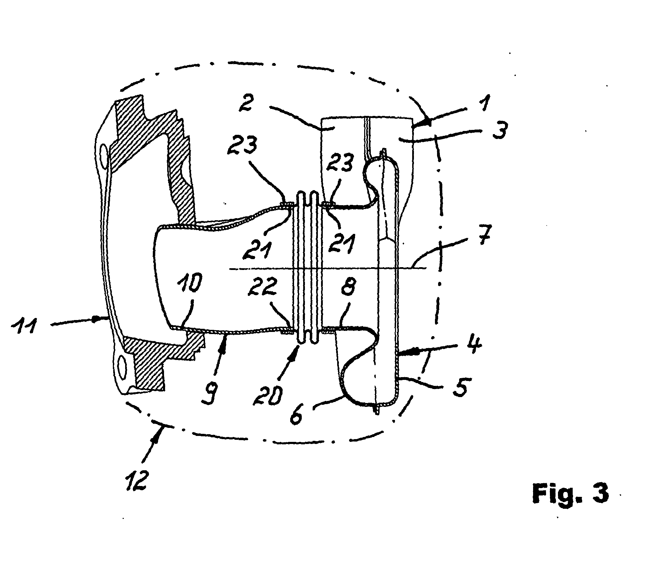

Die Erfindung ist nachfolgend anhand von in den Zeichnungen dargestellten Ausführungsbeispielen näher erläutert. Die Figuren 1 bis 3 zeigen hierbei jeweils im schematischen vertikalen Längsschnitt ein Mantelgehäuse, ein Laufradgehäuse mit Zufuhrkanal, einen Überströmbereich und einen Auslassflansch. Die Ausführungsformen in den Figuren 1 und 3 dienen lediglich zur Illustration des Erfindungsgedankens und sind nicht Ausführungsformen der Erfindung, für die Schutz begehrt wird.

In den Figuren 1 bis 3 ist mit 1 ein trichterförmiger Zufuhrkanal aus zwei Blechschalen 2, 3 bezeichnet, der in nicht näher veranschaulichter Weise mit den Abgasrohren einer Brennkraftmaschine verbunden ist. Der Zufuhrkanal 1 mündet in ein spiralförmig gekrümmtes Laufradgehäuse 4, das aus zwei Blechschalen 5, 6 besteht, die am Außenumfang gefügt sind. Das Laufrad ist nicht näher dargestellt. Lediglich seine Achse 7 ist eingezeichnet.

Die Blechschale 6 des Laufradgehäuses 4 weist einen axial ausgerichteten rohrförmigen Abgangsstutzen 8 auf. Dieser Abgangsstutzen 8 ist in nachfolgend noch näher beschriebener Weise mit einem Überströmbereich 9 für das Abgas relativ verschieblich gekoppelt. Der Überströmbereich 9 kann aus einem Stahlblech rohrartig geformt sein. Das dem Laufradgehäuse 4 abgewandte Ende 10 des Überströmbereichs 9 fasst in einen aus Guss bestehenden Auslassflansch 11 und ist mit diesem gefügt.

Wie die strichpunktierte Linienführung in den Figuren 1 bis 3 zu erkennen gibt, sind der Auslassflansch 11, der Überströmbereich 9, das Laufradgehäuse 4 und der Zufuhrkanal 1 von einem nicht näher veranschaulichten Mantelgehäuse 12 umschlossen, das zur Umgebung hin gasdicht ausgebildet und entsprechend dem jeweiligen Anwendungsfall konstruktiv gestaltet ist.

Die relativverschiebliche Kopplung des Laufradgehäuses 4 mit dem Überströmbereich 9 ist gemäß der Ausführungsform der Figur 1 dadurch verwirklicht, dass ein zylindrisch ausgebildetes Ende 13 des Überströmbereichs 9 den Abgangsstutzen 8 übergreift. Dabei ist das Ende 13 mit einem radial nach innen geprägten Ringwulst 14 versehen. Die konvexe Oberfläche 15 des Ringwulstes 14 gelangt folglich mit der äußeren Oberfläche 16 des Abgangsstutzens 8 in Reibungskontakt.

Bei der Ausführungsform der Figur 2 ist das den Abgangsstutzen 8 übergreifende Ende 13a des Überströmbereichs 9 mit einem radial nach außen geprägten Ringwulst 17 versehen. Dadurch wird eine innere Ringnut 18 gebildet, in die ein Dichtelement 19 in Form eines Dichtrings eingebettet wird. Dieses Dichtelement 19 gelangt an der äußeren Oberfläche 16 des Abgangsstutzens 8 zur Anlage. Eine thermisch bedingte Relativverschiebung von Überströmbereich 9 und Laufradgehäuse 4 ist hierdurch problemlos gesichert.

Im Umfang der Ausführungsform der Figur 3 ist der Überströmbereich 9 durch einen Faltenbalg 20 mit dem Abgangsstutzen 8 des Laufradgehäuses 4 dicht gekoppelt. Der Faltenbalg 20 besitzt rohrförmige Endabschnitte 21, mit denen er den Abgangsstutzen 8 und das benachbarte Ende 22 des Überströmbereichs 9 übergreift. Mit Hilfe von auf die Endabschnitte 21 geschobenen Fixierringen 23 wird der Faltenbalg 20 am Abgangsstutzen 8 und am Überströmbereich 9 festgelegt.

### Bezugszeichenaufstellung:

- 1 -: Zufuhrkanal
- 2 -: Blechschale von 1
- 3 -: Blechschale von 1
- 4 -: Laufradgehäuse
- 5 -: Blechschale von 4
- 6 -: Blechschale von 4
- 7 -: Achse
- 8 -: Abgangsstutzen von 4
- 9 -: Überströmbereich
- 10 -: Ende von 9
- 11 -: Auslassflansch
- 12 -: Mantelgehäuse
- 13 -: Ende von 9
- 13a -: Ende von 9
- 14 -: Ringwulst an 13
- 15 -: Oberfläche von 14
- 16 -: Oberfläche von 8
- 17 -: Ringwulst an 13a
- 18 -: Ringnut in 17
- 19 -: Dichtelement
- 20 -: Faltenbalg
- 21 -: Endabschnitte v. 20
- 22 -: Ende von 9
- 23 -: Fixierringe

## Patentansprüche

1. Gehäuseanordnung für den Turbolader einer Brennkraftmaschine, wobei die Gehäuseanordnung ein Laufradgehäuse (4) mit Zufuhrkanal (1), einen mit dem Laufradgehäuse (4) gekoppelten sowie an einen Auslassflansch (11) angeschlossenen Überströmbereich (9) für Abgas und ein mindestens den Überströmbereich (9), das Laufradgehäuse (4) und den Zufuhrkanal (1) umschließendes Mantelgehäuse (12) aufweist, wobei das Laufradgehäuse (4) aus zwei am Außenumfang gefügten Blechschalen (5, 6) besteht und wobei der Überströmbereich (9) mit dem Laufradgehäuse (4) relativverschieblich gekoppelt ist, wobei das Laufradgehäuse (4) einen axial ausgerichteten, rohrförmigen Abgangsstutzen (8) aufweist, der von einem zylindrisch ausgebildeten Ende (13) des Überströmbereichs (9) relativverschieblich übergriffen ist, **dadurch gekennzeichnet, dass** das den Abgangsstutzen (8) übergreifende Ende (13a) des Überströmbereichs (9) mit einem radial nach außen geprägten Ringwulst (17) versehen und in die **dadurch** gebildete innere Ringnut (18) ein Dichtelement (19) eingebettet ist, wobei der Abgangsstutzen (8) einstückig aus der Blechschale (6) des Laufradgehäuses (4) ausgebildet ist.

## Claims

1. Housing arrangement for the turbocharger of an internal combustion engine, with the housing arrangement having a rotor housing (4) with an inflow duct (1), an overflow region (9), which is coupled to the rotor housing (4) and which is connected to an outlet flange (11), for exhaust gas, and a casing housing (12) which encloses at least the overflow region (9), the rotor housing (4) and the inflow duct (1), with the rotor housing (4) being composed of two sheet-metal shells (5, 6) which are joined at the outer periphery, and with the overflow region (9) being coupled to the rotor housing (4) in a relatively movable manner, with the rotor housing (4) having an axially aligned tubular outlet pipe (8) over which a cylindrical end (13) of the overflow region (9) engages in a relatively movable manner, **characterized in that** that end (13a) of the overflow region (9) which engages over the outlet pipe (8) is provided with a radially outwardly embossed annular bead (17) and a sealing element (19) is embedded into the inner annular groove (18) which is formed in this way, with the outlet pipe (8) being integrally formed out of the sheet-metal shell (6) of the rotor housing (4).

## Revendications

1. Agencement de carter pour le turbogénérateur d'une machine à combustion, dans lequel l'agencement du carter comporte un boîtier de roue (4) avec un canal d'amenée (1), une zone de trop-plein (9) accouplée au boîtier de roue (4) ainsi qu'à une bride de sortie (11) pour les gaz d'échappement et un boîtier enveloppe (12) renfermant au moins la zone de trop-plein (9), le boîtier de roue (4) et le canal d'amenée (1), dans lequel le boîtier de roue (4) consiste en deux coques en tôle (5, 6) assemblées sur la périphérie extérieure et dans lequel la zone de trop-plein (9) est accouplée au logement de roue (4) de façon relativement déplaçable, dans lequel le boîtier de roue (4) comporte un manchon de sortie (8) tubulaire dirigé axialement, qui est emmanché de façon relativement mobile dans une extrémité de configuration cylindrique (13) de la zone de trop-plein (9),
**caractérisé en ce que** l'extrémité (13a) de la zone de trop-plein (9) emmanchée sur le manchon de sortie (8) est munie d'un bourrelet annulaire (17) estompé radialement vers l'extérieur, et dans la gorge annulaire interne (18) ainsi formée, est logé un élément d'étanchéité (19) dans lequel la tubulure de sortie (8) est formée d'un seul tenant à partir de la coque en tôle (6) du boîtier de roue (4).
